# EUROPEAN PATENT SPECIFICATION

(11) **EP 2 190 297 B1**
(45) Date of publication and mention of the grant of the patent: **11.03.2015**
(21) Application number: 08796651.1
(22) Date of filing: 25.07.2008
(51) Int. Cl.: A23G 3/34, A21C 11/16

(54) **METHOD AND APPARATUS FOR PROCESSING MULTIPLE CONFECTIONERY ROPES**
VERFAHREN UND GERÄT FÜR DIE VERARBEITUNG VON MEHRFACHEN KONFEKTSTRÄNGEN
PROCEDE ET APPAREIL POUR TRAITER DE MULTIPLES CORDES DE CONFISERIE

(30) Priority: 27.07.2007 US 952256 P
(43) Date of publication of application: 02.06.2010
(73) Proprietor: Intercontinental Great Brands LLC, East Hanover, NJ 07936 (US)
(72) Inventor: JANI, Bharat, East Brunswick, NJ 08816 (US)
(74) Representative: Wilson Gunn
(86) International application number: PCT/US2008/071226
(87) International publication number: WO 2009/018162

(56) References cited:
- EP-A2- 1 894 476
- WO-A1-2006/079338
- WO-A2-2005/027649
- US-A- 4 192 636
- US-A- 4 601 907
- US-A- 5 120 554
- US-A- 5 955 116
- US-A1- 2002 136 812
- US-A1- 2007 104 828
- US-A1- 2007 104 828
- US-B1- 6 280 780
- US-B2- 6 558 727

## Description

### Field of the Invention

The present invention relates generally to a method and an apparatus for forming individual center-filled confectionery pieces from a continuous rope or strand. More particularly, the present invention related to a method and apparatus for forming several such centre-filled confectionery pieces simultaneously via extrusion and cutting of several individuals ropes of confectionery.

### BACKGROUND OF THE INVENTION

Center-filled confectionery products are well known. These products typically have a solid or semi-solid exterior shell and a soft liquid or semi-liquid center. One well known example of such center-filled confectionery products are liquid-filled gum pieces.

One typical process for forming such center-filled confectionery products is to extrude a continuous rope or strand into a hollow-tubular configuration. The hollow rope is then filled with the soft or liquid confectionery product. Thereafter, the rope is traditionally processed in a longitudinally continuous fashion so as to size the rope and pass the rope between dies which continuously cut the rope into individual center-filled pieces. The process for forming such pieces and an apparatus for affecting the process is more fully shown and described in U.S. Patent Nos. 6,838,098, 6,558,727; 6,742,001 and 6,284,291.

US 2007/0104828 describes a method of manufacturing centre-filled confectionery products involving separating a web of adjoined sealed centre-filled confectionery pieces into a plurality of individual centre-filled confectionery products.

US Patent No. 5,120, 554 describes a free standing die assembly for use in the production of extended products, the assembly having a due unit secured to one or more planar faces of the plate, with each of the die units having at least one die orifice in the outer surface thereof.

Whilst these process and similar processes serve adequately form center-filled confectionery products such as center-filled gum, the speed and efficiency of the process is limited due to the fact that the rope must be fed individually into the forming apparatus which typically processed the rope in a linear fashion. The rope, being a rubbery material has a tendency to longitudinally contract after it is extruded, due to natural forces, this is comparable to a relaxation. The faster the product is extruded and reduced, the more likely it is to relax. With center filled products any longitudinal contraction after cutting may cause the center fill material to leak out of the product. Thus, there is a need to allow for an efficient process to produce gum, while avoiding the high shrinkage normally associated with preparation of such products.

It is desirable to provide a process and apparatus which more efficiently processed multiple ropes of individually extruded material simultaneously to increase the yield of the apparatus, while still allowing for such center-filled confectionery products to be sufficiently stable to prevent leakage. Further, it is desirable to provide a process and apparatus which more efficiently processes a rope of extruded material in such a fashion that reduces or eliminates the need to size and/or relax the rope prior to cutting.

### SUMMARY OF THE INVENTION

The present invention provides a method and apparatus which processes multiple ropes of material to increase yield. The method of the present invention extruding a plurality of individual, continuous tubular ropes of a chewing gum product; filling each of said tubular ropes with a confectionery product so as to form a plurality of filled ropes; passing each of said filled ropes through a rope sizing apparatus, said rope sizing apparatus comprising a plurality of pairs of rollers for accommodating a filled rope, and as the filled rope passes through said rope sizing apparatus, the speed of the pairs of rollers increases; depositing each of said filled ropes onto a surface of at least one relaxation conveyor, wherein said step of depositing comprises the use of at least one swing arm to deposit said plurality of filled ropes onto said at least one relaxation conveyor in a wave pattern across the width of said relaxation conveyor; and
simultaneously feeding said plurality of filled ropes into a cutting apparatus; and cutting each of said -filled ropes in said cutting apparatus.

In an aspect of the invention, an apparatus for manufacturing center-filled confectionery products is provided, the apparatus including an extruder, which simultaneously extrudes a plurality of individual, continuous tubular ropes of a first confectionery product; a filling apparatus, which fills each of said individual, continuous tubular ropes with a second confectionery product; a rope sizing apparatus, said rope sizing apparatus comprising a plurality of pairs of rollers for accommodating a filled rope, and as the filled rope passes through said rope sizing apparatus, the speed of the pairs of rollers increases; at least one relaxation conveyor;
at least one swing arm to deposit said plurality of filled ropes onto said at least one relaxation conveyor in a wave pattern; and
a cutting apparatus, which simultaneously cuts said plurality of individual, continuous ropes into individual pieces.

In another aspect of the invention, a method for manufacturing center-filled confectionary products is provided, the method of including the steps of extruding a continuous tubular rope of confectionery product, filling the continuous tubular rope with a second confectionery product, and feeding the filled tubular rope into a cutting apparatus, where the rope is cut into individual pieces.

### OVERVIEW OF THE INVENTION

In some embodiments, there is provided a method of manufacturing center-filled confectionery products including the steps of: extruding a plurality of individual, continuous tubular ropes of a first confectionery product; filling each of the tubular ropes with a second confectionery product, simultaneously feeding the multiple filled ropes into a cutting apparatus; and cutting the multiple -filled ropes in the cutting apparatus. Optionally, the filing step may include the step of supplying a volume of the second confectionery product from a container; and simultaneously injecting the second confectionery products from the container into the tubular ropes as they are extruded. In some embodiments, the injecting step further includes providing a plurality of injecting nozzles for injecting the second confectionery product into the tubular ropes.

The invention further provides an apparatus for manufacturing center-filled confectionery products including: an extruder, which simultaneously extrudes a plurality of individual, continuous tubular ropes of a first confectionery product; a filling apparatus, which fills each of the individual, continuous tubular ropes with a second confectionery product; and a cutting apparatus, which simultaneously cuts the plurality of individual, continuous ropes into individual pieces. If desired, the apparatus may additionally include a rope sizer.

In some embodiments, the method and apparatus described herein may further include the step of simultaneously sizing the multiple filled ropes. Additionally, the method and apparatus may include providing a time delay for passage of the multiple ropes between the sizing cut and the cutting step. The time delay may be achieved by any desired means, such as through the use of at least one relaxation conveyor, through the use of multiple relaxation conveyors, or through the use of one relaxation conveyor, which is wide enough to transport a plurality of the continuous tubular ropes simultaneously.

If desired, the sizing may include providing a plurality of rollers for accommodating the filled ropes; and simultaneously passing the tubular ropes between the rollers. Optionally, the rollers closest to the entry point of the tubular ropes may move slower than the rollers towards the exit point of the tubular ropes. In addition, the rollers closer to the entry point of the tubular ropes may have a wider groove than the rollers towards the exit point of the tubular ropes.

In one particular embodiment, the cutting step may include providing a chain cutter, the chain cutter having a plurality of longitudinally aligned dies, wherein the chain cutter is wide enough to accommodate the plurality of multiple filled ropes in a side-by-side configuration. Optionally, the cutting step may include providing a chain cutter, the chain cutter having a plurality of longitudinally aligned dies, wherein the chain cutter is wide enough to accommodate the plurality of multiple filled ropes in a vertical configuration.

Optionally, the method and apparatus described herein may include the step of applying an anti-sticking agent to one or more of the components of the invention. For example, the invention may include applying an anti-sticking agent to the tubular rope after extrusion, or it may include applying an anti-sticking agent to the cutting apparatus, or to any other component desired. In some embodiments, the plurality of individual, continuous tubular ropes of a first confectionery product may be extruded simultaneously. Alternatively, the plurality of individual, continuous tubular ropes of a first confectionery product may be extruded in an alternating pattern.

In embodiments incorporating a filling apparatus, the filling apparatus may be located at a point substantially near the extrusion apparatus, such that each individual confectionery rope is filled at or near the time where it is extruded. Optionally, the filling apparatus may include a plurality of injecting nozzles for simultaneously injecting the second confectionery product into the tubular ropes.

### BRIEF DESCRIPTION OF THE DRAWINGS

Figure 1 shows a schematic drawing of the center-filled consumable product forming apparatus as described herein.
Figure 2 shows a close-up of one embodiment of the extruder, incorporating multiple extrusion nozzles.
Figure 3 shows a chain cutting apparatus as described in one embodiment of the invention.
Figure 4 shows a schematic arrangement of a plurality of chain cutters of Figure 3.

### DETAILED DESCRIPTION OF THE PREFERRED EMBODIMENT

The present invention is directed to an apparatus for extruding continuous tubular ropes or strands of a first confectionery product. Embodiments described herein provide a multi-component composition which includes at least one center-fill region and a confectionery region. The individual confectionery piece may also include an outer coating or shell, which typically provides a crunchiness to the piece when initially chewed. The individual confectionery pieces may form a variety of shapes including pellet, tablet, ball, pillow, chunk, stick and slab, among others.

An extruder for extruding the continuous tubular ropes or strands of a first confectionery product is capable of extruding multiple individual tubular ropes of a center-filled confectionery product. The ropes may be of any shape or size desired, including circular, rectangular, or any other formation desired. In one embodiment, there are at least four simultaneously extruded tubular ropes; however any number of tubular ropes may be contemplated by the present invention. The tubular ropes are then simultaneously fed into a cutting apparatus for cutting individual pieces of center-filled confectionery products. This embodiment of the invention may incorporate several stages after extrusion, including a sizing step and a relaxation step.

In an alternate embodiment, the 5a :ionery product may be extruded and fed directly into a cutting apparatus, such as a chain cutter. In this embodiment, the confectionery product may be extruded at substantially the correct size, and thus reducing or even eliminating the need for a rope sizing apparatus and/or a relaxation apparatus. Such extrusion may be performed by using a multiple extruder apparatus as described in U.S. Patent No. 5,698,233.

### The Apparatus

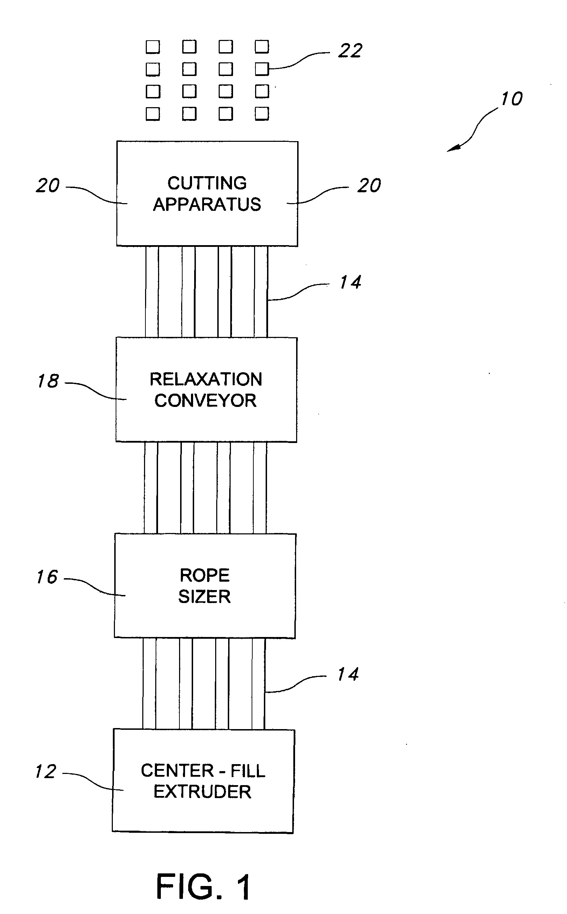

The apparatus **10** may be used in conjunction with the present invention is schematically shown in Fig. 1. The apparatus **10** includes an extruder **12**, which may extrude one or more center-filled ropes **14**. The extruder **12** may include one or more injection nozzles for injecting liquid center-fill product into a hollow tubular rope(s) **14**. The rope(s) **14** pass through a rope sizer **16**, more fully described herein below, which reduces the size of the extruded rope(s) **14.** The sized rope(s) **14** then pass to a relaxation conveyor **18,** which will also be described in further detail hereinafter. The relaxation conveyor **18** allows the rope(s) **14** to relax. Thereafter, the rope(s) **14** are moved through a cutting apparatus **20**, also more fully described below, which cuts the rope(s) **14** into individual pieces **22**. A similar apparatus such as that disclosed in Applicant's co-pending U.S. provisional application (entitled "Method and Apparatus for Processing Confectionery Products", Attorney Docket No. 1421-197P, filed July 27, 2007) may be used.

### The Extruder

The present invention includes an extruder **12** which is capable of extruding a continuous tubular rope **14** of filled confectionery material. According to one aspect of the present invention, the extruder **12** is capable of continuously extruding a plurality of individual tubular ropes **14** of confectionery simultaneously. Preferably the tubular ropes **14** are extruded in a side-by-side fashion, but they may be extruded in a vertical manner, or in any other arrangement desired. According to the preferred embodiment of the invention, the extruder **12** extrudes four simultaneous tubular ropes **14**, but it is contemplated that any number of simultaneous ropes can be extruded.

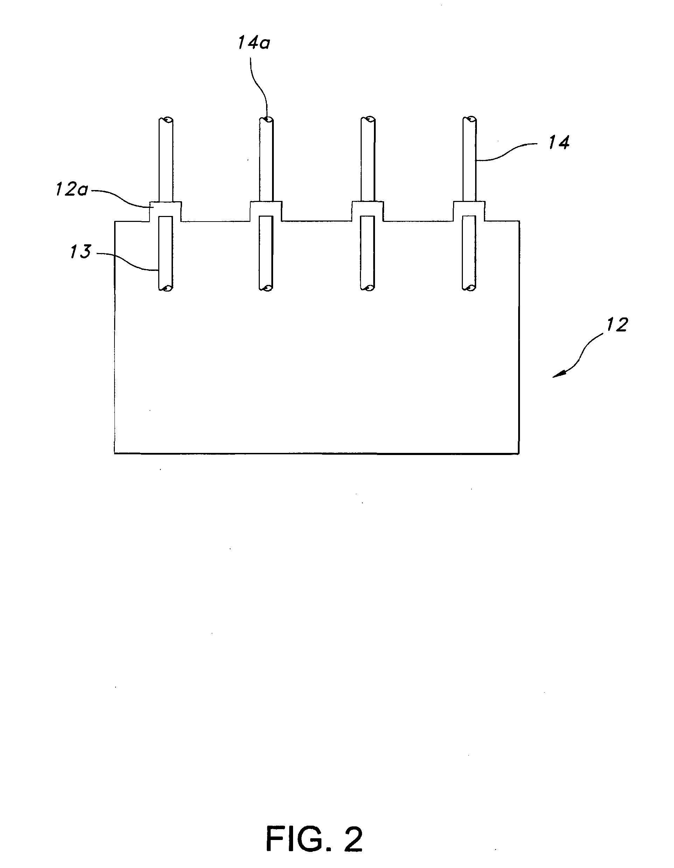

Referring to Fig. 2, several tubular ropes **14** of material may be extruded individually, through the use of several extruder dies **12a**. Extruding multiple tubular ropes individually eliminates the need to separate the tubular ropes **14** at a later stage, such as would be required if the tubular ropes **14** are extruded as attached to each other.

In this embodiment center-fill material **14a** may be injected into the tubular ropes **14** during the extrusion process. The center-fill material **14a** may be injected by center nozzles **13**, located concentrically within the extruder nozzles **12a**. While this is one technique that may fill the center-filled ropes **14**, any suitable filling technique may be employed. The center fill composition **14a** may be injected at any time desired, and preferably the center-fill composition **14a** is injected directly into the tubular rope **14** at the time that it is being extruded, or soon thereafter.

In one embodiment of the invention, once extruded from the multiple extruder **12**, the ropes **14** may be fed directly into the chain cutting apparatus **20**, with no need for further sizing or relaxing of the rope product **14**. Optionally, the product may be subjected to a time delay apparatus, such as a relaxation conveyor **18**, prior to being fed into the cutting apparatus **20.**

The extrusion may take place at any velocity desired. The velocity of the extrusion relates to the velocity of one or more of the other elements of the apparatus, including sizing, relaxation, and cutting velocities. Preferably, the extrusion feeds the rope product at a velocity of about 50 m/min to about 150 m/min, and more specifically at about 100 m/min,

### The Cutting Apparatus

Any conventional means to cut the confectionery products into individual pieces can be used with the present invention. Preferably the invention uses a chain cutter apparatus with multiple dies to cut a plurality of individual pieces from the continuous filled rope. Such chain cutting apparatuses include those described in Applicant's co-pending PCT patent application (entitled "Chain cutter for continuously forming center-filled gum pieces", Attorney Docket No. 1421-182 PCT, filed June 29, 2007).

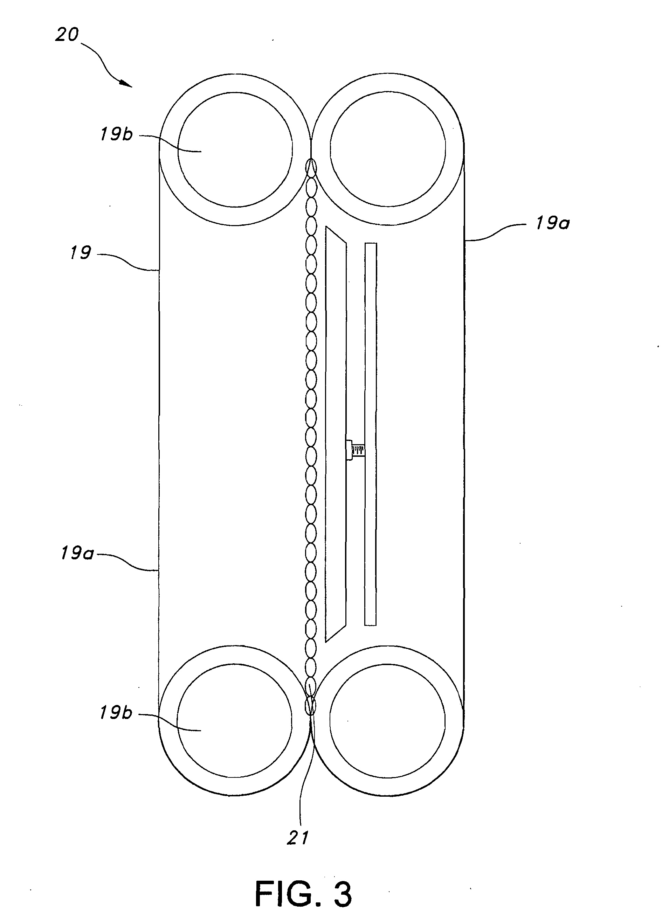

Referring now to Figure 1, the cutting apparatus **20** may be provided after use of the optional relaxation conveyor **18**; however the cutting apparatus **20** may be located after the optional rope sizer **16** or immediately after extrusion **12**. According to an aspect of present invention, multiple continuous ropes **14** are fed into cutting apparatus **20,** wherein each rope **14** may be fed between the open die cavities **21** of multiple chain dies **19**. One such chain die **19** arrangement is shown in Figure 3. The die cavity portions **21** are then closed about the rope of product effectively forming and cutting the rope into a plurality of discrete pieces. The cutting apparatus **20** has a length as measured between the rollers **19b**, which may be substantially long enough to allow the product to remain within the closed die cavities to be formed.

As the individual closed die cavity **21**, which contains a piece of confectionery product within the cavity **21**, traverses from one end of the cutter to the other, the first region of the product is effectively sealed. Such sealing is important with a center-filled gum product so as to prevent release of the liquid center from the formed piece.

The cutting apparatus may contain any number of individual die cavities **21.** Preferably the cutting apparatus has about 10 to about 20 individual die cavities **21** per rope of confectionery.

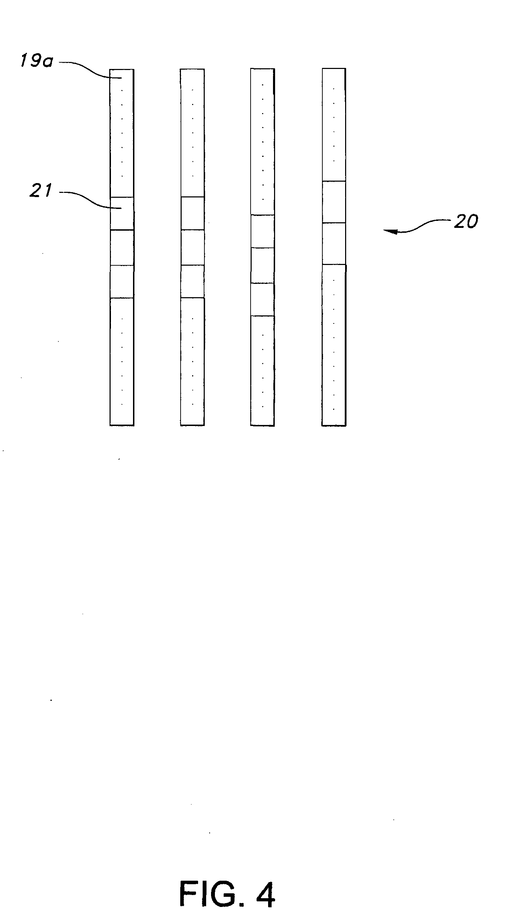

The cutting apparatus according to the invention should be sufficiently wide enough to allow multiple continuous tubular ropes **14** to be fed and cut simultaneously. Referring to Figure 4, a preferred multiple rope chain cutting apparatus is shown schematically. The cutting apparatus **20** has a plurality of longitudinally aligned cutting die cavities **21** along its length. The tubular ropes **14** may be fed into the cutting apparatus **20** in a side-by-side formation, spaced sufficiently far apart so as to allow for individual cutting. The ropes **14** may alternatively be fed into cutting apparatus **20** vertically, or any other manner which allow multiple cuts to be made. Preferably, the apparatus **20** may be sufficiently wide enough to allow at least four tubular ropes **14** to be cut, but any number of ropes **14** may be simultaneously cut pursuant to the present invention.

Each chain die **19** includes a pair of chains **19a** supported between chain rollers **19b**, which define therebetween the die cavities **21**. The chain die is more fully described in the above-incorporated patent application.

### The Rope Sizer

The present invention may optionally incorporate the use of an apparatus to size the ropes are they are extruded, called a "rope sizer" **16**. In traditional extrusion, the rope **14** is extruded at a size that is much thicker and larger than the end product. Thus, there may be a need for a proper sizing apparatus, which linearly extends the product, continuously stretching it out so that it is the right thickness and size.

Any rope sizing apparatus **16** may be used in the present invention, including that disclosed in Applicant's co-pending patent application (entitled "Method and Apparatus for Processing Confectionery Products", Attorney Docket No. 1421-197P, filed July 27, 2007), may be used.

The preferred sizer **16** has a plurality of pairs of rollers, which have grooved openings to pull the rope product **14** through. As the gum goes through the rope sizer **16**, the speed of the pairs of rollers increases, so the last pair of rollers moves at a speed that may be several times faster than the first pair of rollers. In addition, the grooved openings of the latter pair of rollers gets smaller, which helps to size the rope **14** properly.

One aspect of the invention manufactures multiple confectionery ropes, using multiple rope sizing apparatuses **16**. The rope sizing pair of rollers may be side-by-side, may be vertically aligned, or may be arranged in any other formation that would allow the simultaneous sizing of multiple ropes of confectionery product. The rope sizer rollers may be connected to each other or they may be individually supported. In one aspect of the invention, the rope sizing apparatus **16** may be located immediately after the tubular rope **14** has been extruded **12.** The tubular ropes **14** of this aspect are extruded individually, and thus there may be no need for a separating apparatus between the sizing and the extrusion stages of the process. In other aspects of the invention, the rope sizing apparatus **16** may not be required, such as by using the multiple extruder apparatus **12** as described previously, and feeding the ropes **14** directly into the cutting apparatus **20.**

### The Relaxation Conveyor

The method and apparatus of the present invention may optionally use a relaxation conveyor **18** to aid in the formation of the individual gum pieces **22.** By "relaxation conveyor", it is contemplated that any mechanism to allow the tubular confectionery **14** to "relax" and contract in size prior to cutting may be used. The relaxation conveyor **18** provides a time delay between extrusion **12** and/or sizing **16** and cutting **20**, to allow the confectionery rope(s) **14** to get to a more stable form.

Any relaxation conveyors **18** may be used in the present invention, including those disclosed in Applicant's co-pending application entitled "Method and Apparatus for Processing Confectionery Products", Attorney Docket No. 1421-197P, filed July 27, 2007), may be used.

The relaxation conveyor **18** incorporates the use of a swing arm, which feeds the confectionery rope(s) **14** onto the relaxation conveyor **18** in a non-linear path, such as a traditional wave pattern. In one aspect of the invention, the relaxation conveyor **18** may be located after the rope(s) **14** has been sized, such as through a rope sizing apparatus **16** as described previously, and before the rope(s) **14** is cut by the cutting apparatus **20**. In other aspects of the invention, the relaxation conveyor **18** is not required, such as by using the multiple extruder apparatus as previously described.

When multiple ropes **14** are extruded, the use of a very wide relaxation conveyor **18** may be contemplated, but the use of multiple conveyors may also be used. For example, when extruding four continuous and simultaneous confectionery ropes **14**, the ropes may be spread on the same relaxation conveyor **18**, which may be wide enough to encompass all four ropes. In contrast, the use of four individual relaxation conveyors **18** may also be contemplated, each of which may be used to simultaneously transport one confectionery rope each. Further, the use of any other number of conveyors **18** is also contemplated, such as using two relaxation conveyors **18**, each of which may be designed to transport two confectionery ropes **14**.

In addition the use of multiple swing arms is likewise contemplated. The confectionery ropes **14** may each be deposited on the relaxation conveyor **18** or conveyors via one swing arm simultaneously, or they may be deposited on the relaxation conveyor **18** or conveyors via multiple swing arms. As with the relaxation conveyor **18** itself, any number of swing arms may be used, to deposit one or more ropes **14** simultaneously. The use of a swing arm is an optional feature, and may be avoided if desired.

The confectionery products described herein may be manufactured by use of the extruder **12**, rope sizer **16**, relaxation table **18**, and cutting apparatus **20**, or they may be manufactured by use of any combination of these elements. For example, in one aspect of the invention, the products described herein may be extruded and then fed directly into the cutting apparatus **20**. Further, the methods and apparatus described herein may be used to manufacture any number of confectionery ropes **14** simultaneously.

Optionally, an anti-sticking agent may be used in conjunction with the extruder **12**, rope sizer **16**, relaxation table **18**, and cutting apparatus **20**, to prevent the rope from adhering to the individual parts and getting stuck, which would decrease productivity. Generally, anti-sticking agents may be in the form of powders such as talc, calcium carbonate, or oils. For example, a fine mist of a food grade oil or an oil-based material may be sprayed on the rollers and material engaging surfaces of the rope sizer before or as the rope of gum material makes contact with the rollers. The oil temporarily reduces or eliminates the stickiness of the gum material and allows it to be sized without the need to cool the rollers with cooled air or nitrogen gas. In the alternative or in addition, it is also possible to apply the oil material directly on the rope of gum material. Suitable food grade oil or oil-based materials include, but are not limited to almond oil, apricot kernel oil, avocado oil, black cumin seed oil, borage seed oil, camellia oil, castor oil, cocoa oil, coconut oil, corn oil, cottonseed oil, evening primrose seed oil, grapeseed oil, hazelnut oil, hemp seed oil, jojoba oil, karanja seed oil, kukui nut oil, macadamia nut oil, meadowfoam seed oil, neem seed oil, olive oil, palm oil, peanut oil, pumpkin seed oil, rosehip seed oil, safflower oil, sea buckthorn oil, sesame seed oil, shea nut oil, soybean oil, sunflower oil, tamanu oil, vitamin E oil, and wheat germ oil. Synthetic oils may also be used. The anti-sticking agent may be applied to any individual part of the apparatus, or the rope **14** itself, to reduce sticking.

In an embodiment, the parts of the apparatus may be kept at a reduced temperature in order to prevent the confectionery material from sticking to the various parts described herein. For this purpose, cooled air or gas may be directed toward the rollers, the relaxation conveyor, the cutting apparatus, or any other part of the system in which the confectionery may potentially stick. The cooling air may flow directly at the surface of the parts to maintain it at a pre-determined temperature. In another embodiment, the parts themselves may be chilled, such as using a chilled extruder **12**, a chilled rope sizer **16**, a chilled relaxation conveyor **18** and/or a chilled cutting apparatus **20**. Such cooling may be achieved through use of cooled fluid, such as water, liquid nitrogen, or other fluid. In an embodiment, the center fill material may be cooled upon exit from the filling apparatus. Using cooled center fill material has the effect of cooling the outer confectionery portion from the inside. The temperature of the parts is preferably maintained below -90°F, although the actual temperature may vary with the material and production rate. The individual parts and/or the confectionery itself may be cooled at any temperature from about -100°F to about 50°F. In order to control costs of manufacture, the temperature should be just cold enough to support production, while inhibiting sticking of the confectionery.

## Claims

1. A method of manufacturing center-filled chewing gum products comprising the steps of:
extruding a plurality of individual, continuous tubular ropes of a chewing gum product;
filling each of said tubular ropes with a confectionery product so as to form a plurality of filled ropes;
passing each of said filled ropes through a rope sizing apparatus, said rope sizing apparatus comprising a plurality of pairs of rollers for accommodating a filled rope, and as the filled rope passes through said rope sizing apparatus, the speed of the pairs of rollers increases;
depositing each of said filled ropes onto a surface of at least one relaxation conveyor, wherein said step of depositing comprises the use of at least one swing arm to deposit said plurality of filled ropes onto said at least one relaxation conveyor in a wave pattern across the width of said relaxation conveyor; and
simultaneously feeding said plurality of filled ropes into a cutting apparatus; and cutting each of said -filled ropes in said cutting apparatus.

2. A method of claim 1 wherein said step of passing each of said filled ropes through a rope sizing apparatus comprises: simultaneously sizing said plurality of filled ropes, wherein each filled rope passes through a separate plurality of rollers.

3. A method of claim 2, wherein said time delay is achieved through the use of one relaxation conveyor, which is wide enough to transport a plurality of said plurality of filled ropes simultaneously.

4. method of claim 1, comprising one swing arm to deposit each individual filled rope onto said at least one relaxation conveyor.

5. A method of claim 1, wherein said filling step comprises the step of:
supplying a volume of said confectionery product from a container; and
simultaneously injecting said confectionery product from said container into each of said tubular ropes as they are extruded.

6. A method of claim 5, wherein said injecting step further comprises:
providing a plurality of injecting nozzles for injecting said confectionery product into said tubular ropes.

7. A method of claim 2, wherein said sizing step further comprises:
providing a plurality of rollers for accommodating said filled ropes; and simultaneously passing said filled ropes between said rollers.

8. The method of claim 7, wherein the rollers closer to the entry point of the filled ropes have a wider groove than the rollers towards the exit point of the filled ropes.

9. A method of claim 1 wherein said cutting step further comprises:
providing a chain cutter, said chain cutter having a plurality of longitudinally aligned dies, wherein said chain cutter is wide enough to accommodate said plurality of filled ropes in a side-by-side configuration.

10. The method of claim 1, wherein said cutting step comprises:
providing a chain cutter, said chain cutter having a plurality of longitudinally aligned dies, wherein said chain cutter is wide enough to accommodate said plurality of filled ropes in a vertical configuration.

11. The method of claim 1, further comprising the step of applying an anti-sticking agent to at least one tubular rope after extrusion.

12. The method of claim 1, wherein said plurality of individual, continuous tubular ropes of a chewing gum product are extruded simultaneously.

13. The method of claim 1, wherein said plurality of individual, continuous tubular ropes of a chewing gum product are extruded in a side-by-side pattern.

14. A method of claim 1, wherein the method comprises one swing arm that deposits each of the ropes onto said relaxation conveyor simultaneously.

15. A method of claim 1, wherein the method comprises a plurality of swing arms and each of said swing arms deposits one rope onto said relaxation conveyor.

16. An apparatus for manufacturing center-filled chewing gum products comprising:
an extruder, which simultaneously extrudes a plurality of individual, continuous tubular ropes of a first confectionery product;
a filling apparatus, which fills each of said individual, continuous tubular ropes with a second confectionery product;
a rope sizing apparatus, said rope sizing apparatus comprising a plurality of pairs of rollers for accommodating a filled rope, and as the filled rope passes through said rope sizing apparatus, the speed of the pairs of rollers increases;
at least one relaxation conveyor;
at least one swing arm to deposit said plurality of filled ropes onto said at least one relaxation conveyor in a wave pattern; and
a cutting apparatus, which simultaneously cuts said plurality of individual, continuous ropes into individual pieces.

17. An apparatus of claim 16 further comprising:
a time delay apparatus for passage of said multiple ropes between said sizing step and said cutting step.

18. An apparatus of claim 17, wherein said time delay apparatus comprises at least one relaxation conveyor.

19. An apparatus of claim 16, wherein said filling apparatus is located at a point substantially near the extrusion apparatus, such that each individual confectionery rope is filled at or near the time where it is extruded.

20. An apparatus of claim 19 wherein said filling apparatus comprises a plurality of injecting nozzles for simultaneously injecting said second confectionery product into said tubular ropes.

21. An apparatus of claim 16 wherein said rope sizer comprises a plurality of rollers for simultaneously accommodating said plurality of continuous ropes.

22. The apparatus of claim 21, wherein the rollers closer to the entry point of the tubular ropes have a wider groove than the rollers towards the exit point of the tubular ropes.

23. The apparatus of claim 16, wherein said cutting apparatus further comprises:
providing a chain cutter, said chain cutter having a plurality of longitudinally aligned dies, wherein said chain cutter is wide enough to accommodate said plurality of multiple filled ropes in a side-by-side configuration.

24. The apparatus of claim 16, wherein said cutting apparatus comprises:
providing a chain cutter, said chain cutter having a plurality of longitudinally aligned dies, wherein said chain cutter is wide enough to accommodate said plurality of multiple filled ropes in a vertical configuration.

25. The apparatus of claim 16, further comprising a means for applying an anti-sticking agent to at least one of the rope and the apparatus.

## Patentansprüche

1. Verfahren zur Herstellung zentral gefüllter Kaugummiprodukte, umfassend die folgenden Schritte:
Extrudieren einer Vielzahl von einzelnen, durchgehend röhrenförmigen Strängen eines Kaugummiprodukts;
Befüllen eines jeden der röhrenförmigen Stränge mit einem Süßwarenprodukt, um eine Vielzahl von gefüllten Strängen zu bilden;
Durchführen eines jeden der gefüllten Stränge durch eine Stranggrößenbemessungsvorrichtung, wobei die Stranggrößenbemessungsvorrichtung eine Vielzahl von Rollenpaaren zur Aufnahme eines gefüllten Strangs umfasst, und die Geschwindigkeit der Rollenpaare zunimmt, während der gefüllte Strang durch die Stranggrößenbemessungsvorrichtung geführt wird;
Ablegen eines jeden der gefüllten Stränge auf einer Oberfläche zumindest eines Entspannbandes, wobei der Schritt des Ablegens die Verwendung zumindest eines Schwenkarms umfasst, um die Vielzahl von gefüllten Strängen auf dem zumindest einen Entspannband in einem Wellenmuster über die Breite des Entspannbandes abzulegen; und
gleichzeitiges Zuführen der Vielzahl von gefüllten Strängen in eine Schneidvorrichtung; und Schneiden eines jeden der gefüllten Stränge in der Schneidvorrichtung.

2. Verfahren nach Anspruch 1, wobei der Schritt des Durchführens eines jeden der gefüllten Stränge durch eine Stranggrößenbemessungsvorrichtung umfasst: gleichzeitiges Größenbemessen der Vielzahl von gefüllten Strängen, wobei jeder gefüllte Strang eine separate Vielzahl von Rollen passiert.

3. Verfahren nach Anspruch 2, wobei die Zeitverzögerung durch die Verwendung eines Entspannbandes erreicht wird, welches breit genug ist, um eine Vielzahl der Vielzahl von gefüllten Strängen gleichzeitig zu transportieren.

4. Verfahren nach Anspruch 1, umfassend einen Schwenkarm, um jeden einzelnen gefüllten Strang auf dem zumindest einen Entspannband abzulegen.

5. Verfahren nach Anspruch 1, wobei der Schritt des Befüllens den folgenden Schritt umfasst:
Bereitstellen eines Volumens des Süßwarenprodukts aus einem Behälter; und
gleichzeitiges Einspritzen des Süßwarenprodukts aus dem Behälter in jeden der röhrenförmigen Stränge, während diese extrudiert werden.

6. Verfahren nach Anspruch 5, wobei der Schritt des Einspritzens des Weiteren umfasst:
Bereitstellen einer Vielzahl von Einspritzdüsen zum Einspritzen des Süßwarenprodukts in die röhrenförmigen Stränge.

7. Verfahren nach Anspruch 2, wobei der Schritt der Größenbemessung des Weiteren umfasst:
Bereitstellen einer Vielzahl von Rollen zur Aufnahme der gefüllten Stränge; und gleichzeitiges Durchführen der gefüllten Stränge zwischen den Rollen.

8. Verfahren nach Anspruch 7, wobei die dem Eintrittspunkt der gefüllten Stränge näher liegenden Rollen eine breitere Rille aufweisen als die dem Austrittspunkt der gefüllten Stränge näher liegenden Rollen.

9. Verfahren nach Anspruch 1, wobei der Schritt des Schneidens des Weiteren umfasst:
Bereitstellen eines Kettenschneiders, wobei der Kettenschneider eine Vielzahl von in Längsrichtung ausgerichteten Schneidwerkzeugen aufweist, wobei der Kettenschneider breit genug ist, um die Vielzahl von gefüllten Strängen in einer nebeneinander liegenden Anordnung unterzubringen.

10. Verfahren nach Anspruch 1, wobei der Schritt des Schneidens umfasst:
Bereitstellen eines Kettenschneiders, wobei der Kettenschneider eine Vielzahl von in Längsrichtung ausgerichteten Schneidwerkzeugen aufweist, wobei der Kettenschneider breit genug ist, um die Vielzahl von gefüllten Strängen in einer vertikalen Anordnung unterzubringen.

11. Verfahren nach Anspruch 1, des Weiteren umfassend den Schritt des Aufbringens eines Antihaftmittels auf zumindest einen röhrenförmigen Strang nach der Extrusion.

12. Verfahren nach Anspruch 1, wobei die Vielzahl von einzelnen, durchgehend röhrenförmigen Strängen eines Kaugummiprodukts gleichzeitig extrudiert werden.

13. Verfahren nach Anspruch 1, wobei die Vielzahl von einzelnen, durchgehend röhrenförmigen Strängen eines Kaugummiprodukts in einer nebeneinander liegenden Anordnung extrudiert werden.

14. Verfahren nach Anspruch 1, wobei das Verfahren einen Schwenkarm umfasst, welcher jeden der Stränge gleichzeitig auf dem Entspännband ablegt.

15. Verfahren nach Anspruch 1, wobei das Verfahren eine Vielzahl von Schwenkarmen umfasst, und jeder der Schwenkarme einen Strang auf dem Entspannband ablegt.

16. Vorrichtung zur Herstellung zentral gefüllter Kaugummiprodukte, wobei die Vorrichtung umfasst:
einen Extruder, der gleichzeitig eine Vielzahl von einzelnen, durchgehend röhrenförmigen Strängen eines ersten Süßwarenprodukts extrudiert;
eine Befüllvorrichtung, die jeden der einzelnen, durchgehend röhrenförmigen Stränge mit einem zweiten Süßwarenprodukt befüllt;
eine Stranggrößenbemessungsvorrichtung, wobei die Stranggrößenbemessungsvorrichtung eine Vielzahl von Rollenpaaren zur Aufnahme eines gefüllten Strangs umfasst, und die Geschwindigkeit der Rollenpaare zunimmt, während der gefüllte Strang durch die Stranggrößenbemessungsvorrichtung geführt wird;
zumindest ein Entspannband;
zumindest einen Schwenkarm, um die Vielzahl von gefüllten Strängen auf dem zumindest einen Entspannband in einem Wellenmuster abzulegen; und
eine Schneidvorrichtung, welche gleichzeitig die Vielzahl von einzelnen, durchgehenden Strängen in einzelne Stücke schneidet.

17. Vorrichtung nach Anspruch 16, des Weiteren umfassend:
eine Vorrichtung zur Zeitverzögerung zum Durchführen der mehreren Stränge zwischen dem Schritt des Dimensionierens und dem Schritt des Schneidens.

18. Vorrichtung nach Anspruch 17, wobei die Vorrichtung zur Zeitverzögerung zumindest ein Entspannband umfasst.

19. Vorrichtung nach Anspruch 16, wobei die Befüllvorrichtung sich an einem Punkt im Wesentlichen in der Nähe der Extrudiervorrichtung befindet, so dass jeder einzelne Süßwarenstrang zum Zeitpunkt oder zeitnah zu seiner Extrusion befüllt wird.

20. Vorrichtung nach Anspruch 19, wobei die Befüllvorrichtung eine Vielzahl von Einspritzdüsen zum gleichzeitigen Einspritzen des zweiten Süßwarenprodukts in die röhrenförmigen Stränge umfasst.

21. Vorrichtung nach Anspruch 16, wobei die Stranggrößenbemessungsvorrichtung eine Vielzahl von Rollen zur gleichzeitigen Aufnahme der Vielzahl von durchgehenden Strängen umfasst.

22. Vorrichtung nach Anspruch 21, wobei die dem Eintrittspunkt der röhrenförmigen Stränge näher liegenden Rollen eine breitere Rille aufweisen als die dem Austrittspunkt der röhrenförmigen Stränge näher liegenden Rollen.

23. Vorrichtung nach Anspruch 16, wobei die Schneidvorrichtung des Weiteren umfasst:
Bereitstellen eines Kettenschneiders, wobei der Kettenschneider eine Vielzahl von in Längsrichtung ausgerichteten Schneidwerkzeugen aufweist, wobei der Kettenschneider breit genug ist, um die Vielzahl von mehreren gefüllten Strängen in einer nebeneinander liegenden Anordnung unterzubringen.

24. Vorrichtung nach Anspruch 16, wobei die Schneidvorrichtung umfasst:
Bereitstellen eines Kettenschneiders, wobei der Kettenschneider eine Vielzahl von in Längsrichtung ausgerichteten Schneidwerkzeugen aufweist, wobei der Kettenschneider breit genug ist, um die Vielzahl von mehreren gefüllten Strängen in einer vertikalen Anordnung unterzubringen.

25. Vorrichtung nach Anspruch 16, des Weiteren umfassend ein Mittel zum Auftragen eines Antihaftmittels auf den Strang und/oder die Vorrichtung.

## Revendications

1. Procédé destiné à fabriquer des produits de gomme à mâcher fourrés au centre comprenant les étapes consistant à :
extruder une pluralité de boyaux tubulaires continus individuels, d'un produit de gomme à mâcher ;
remplir chacun desdits boyaux tubulaires de produit de confiserie de façon à former une pluralité de boyaux fourrés ;
faire passer chacun desdits boyaux fourrés à travers un appareil de calibrage de boyau, ledit appareil de calibrage de boyau comprenant une pluralité de paires de rouleaux destinés à recevoir un boyau fourré, et lorsque le boyau fourré passe à travers ledit appareil de calibrage de boyau, la vitesse des paires de rouleaux augmente ;
déposer chacun desdits boyaux fourrés sur une surface d'un transporteur de relaxation au moins, dans lequel ladite étape de dépôt comprend l'utilisation d'un bras oscillant au moins de façon à déposer ladite pluralité de boyaux fourrés sur ledit ou lesdits transporteurs de relaxation en un motif de vague sur toute la largeur dudit transporteur de relaxation ;
introduire simultanément ladite pluralité de boyaux fourrés dans un appareil de coupe ; et
couper chacun desdits boyaux fourrés dans ledit appareil de coupe.

2. Procédé selon la revendication 1, dans lequel ladite étape consistant à faire passer chacun desdits boyaux fourrés à travers un appareil de calibrage de boyau comprend une étape consistant à :
calibrer de manière simultanée ladite pluralité de boyaux fourrés, dans lequel chaque boyau fourré passe à travers une pluralité distincte de rouleaux.

3. Procédé selon la revendication 2, dans lequel ledit retard est obtenu grâce à l'utilisation d'un transporteur de relaxation, qui est assez large de façon à transporter de manière simultanée une pluralité de ladite pluralité de boyaux fourrés.

4. Procédé selon la revendication 1, comprenant un bras oscillant destiné à déposer chaque boyau fourré individuel sur ledit ou lesdits transporteurs de relaxation.

5. Procédé selon la revendication 1, dans lequel ladite étape de fourrage comprend les étapes consistant à :
fournir un volume dudit produit de confiserie en provenance d'un contenant ; et
injecter de manière simultanée ledit produit de confiserie en provenance dudit contenant dans chacun desdits boyaux tubulaires quand ils sont extrudés.

6. Procédé selon la revendication 5, dans lequel ladite étape d'injection comprend en outre une étape consistant à :
fournir une pluralité de buses d'injection destinées à injecter ledit produit de confiserie dans lesdits boyaux tubulaires.

7. Procédé selon la revendication 2, dans lequel ladite étape de calibrage comprend en outre les étapes consistant à :
fournir une pluralité de rouleaux destinés à recevoir lesdits boyaux fourrés ; et
faire passer de manière simultanée lesdits boyaux fourrés entre lesdits rouleaux.

8. Procédé selon la revendication 7, dans lequel les rouleaux les plus proches du point d'entrée des boyaux fourrés présentent une rainure plus large que celle des rouleaux vers le point de sortie des boyaux fourrés.

9. Procédé selon la revendication 1, dans lequel ladite étape de coupe comprend en outre une étape consistant à :
fournir un dispositif tranchant à chaîne, ledit dispositif tranchant à chaîne présentant une pluralité de matrices alignées de manière longitudinale, dans lequel ledit dispositif tranchant à chaîne est assez large de façon à recevoir ladite pluralité de boyaux fourrés dans une configuration côte à côte.

10. Procédé selon la revendication 1, dans lequel ladite étape de coupe comprend une étape consistant à :
fournir un dispositif tranchant à chaîne, ledit dispositif tranchant à chaîne présentant une pluralité de matrices alignées de manière longitudinale ;
dans lequel ledit dispositif tranchant à chaîne est assez large de façon à recevoir ladite pluralité de boyaux fourrés en une configuration verticale.

11. Procédé selon la revendication 1, comprenant en outre une étape consistant à appliquer un agent antiadhésif sur un boyau tubulaire au moins après l'extrusion.

12. Procédé selon la revendication 1, dans lequel ladite pluralité de boyaux tubulaires continus individuels d'un produit de gomme à mâcher sont extrudés de manière simultanée.

13. Procédé selon la revendication 1, dans lequel ladite pluralité de boyaux tubulaires continus individuels d'un produit de gomme à mâcher sont extrudés en un motif côte à côte.

14. Procédé selon la revendication 1, dans lequel le procédé comprend un bras oscillant qui dépose de manière simultanée chacun des boyaux sur ledit transporteur de relaxation.

15. Procédé selon la revendication 1, dans lequel le procédé comprend une pluralité de bras oscillants et chacun desdits bras oscillants dépose un boyau sur ledit transporteur de relaxation.

16. Appareil destiné à fabriquer des produits de gomme à mâcher fourrés au centre comprenant :
une extrudeuse, qui extrude de manière simultanée une pluralité de boyaux tubulaires continus individuels d'un premier produit de confiserie ;
un appareil de fourrage, qui fourre chacun desdits boyaux tubulaires continus individuels avec un second produit de confiserie ;
un appareil de calibrage de boyau, ledit appareil de calibrage de boyau comprenant une pluralité de paires de rouleaux destinés à recevoir un boyau fourré, et lorsque le boyau fourré passe à travers ledit appareil de calibrage de boyau, la vitesse des paires de rouleaux augmente ;
au moins un transporteur de relaxation ;
au moins un bras oscillant destiné à déposer ladite pluralité de boyaux fourrés sur ledit ou lesdits transporteurs de relaxation en un motif de vague ; et
un appareil de coupe, qui coupe de manière simultanée ladite pluralité de boyaux continus individuels en morceaux individuels.

17. Appareil selon la revendication 16, comprenant en outre :
un appareil destiné à retarder le passage desdits multiples boyaux entre ladite étape de calibrage et ladite étape de coupe.

18. Appareil selon la revendication 17, dans lequel ledit appareil destiné à retarder comprend au moins un transporteur de relaxation.

19. Appareil selon la revendication 16, dans lequel ledit appareil de fourrage est situé en un point sensiblement à proximité de l'appareillage d'extrusion, de telle sorte que chaque boyau de confiserie individuel soit fourré au moment de son extrusion ou à un moment proche de celle-ci.

20. Appareil selon la revendication 19, dans lequel ledit appareil de fourrage comprend une pluralité de buses d'injection destinées à injecter de manière simultanée ledit second produit de confiserie dans lesdits boyaux tubulaires.

21. Appareil selon la revendication 16, dans lequel ledit dispositif de calibrage de boyau comprend une pluralité de rouleaux destinés à recevoir de manière simultanée ladite pluralité de boyaux continus.

22. Appareil selon la revendication 21, dans lequel les rouleaux les plus proches du point d'entrée des boyaux tubulaires présentent une rainure plus large que celle des rouleaux vers le point de sortie des boyaux tubulaires.

23. Appareil selon la revendication 16, dans lequel ledit appareil de coupe comprend en outre :
la fourniture d'un dispositif tranchant à chaîne, ledit dispositif tranchant à chaîne présentant une pluralité de matrices alignées de manière longitudinale ;
dans lequel ledit dispositif tranchant à chaîne est assez large de façon à recevoir ladite pluralité de multiples boyaux fourrés en une configuration côte à côte.

24. Appareil selon la revendication 16, dans lequel ledit appareil de coupe comprend :
la fourniture d'un dispositif tranchant à chaîne, ledit dispositif tranchant à chaîne présentant une pluralité de matrices alignées de manière longitudinale ;
dans lequel ledit dispositif tranchant à chaîne est assez large de façon à recevoir ladite pluralité de multiples boyaux fourrés en une configuration verticale.

25. Appareil selon la revendication 16, comprenant en outre des moyens destinés à appliquer un agent antiadhésif sur au moins le boyau ou l'appareil.
